# EUROPEAN PATENT SPECIFICATION

(11) **EP 2 912 943 B1**
(45) Date of publication and mention of the grant of the patent: **30.11.2016**
(21) Application number: 15156611.4
(22) Date of filing: 25.02.2015
(51) Int. Cl.: A01K 43/08, B65B 23/06

(54) **EGG SORTER**
EISORTIERVORRICHTUNG
TRIEUSE D'OEUFS

(30) Priority: 28.02.2014 NL 2012337
(43) Date of publication of application: 02.09.2015
(73) Proprietor: Van de Ven Beheer B.V., 5521 DZ Eersel (NL)
(72) Inventor: Westrum, Richard, 7121 VS Aalten (NL)
(74) Representative: Verhees, Godefridus Josephus Maria

(56) References cited:
- FR-A- 1 107 495
- GB-A- 1 212 268
- US-A1- 2004 099 579

## Description

### Field of the invention

The invention relates to an egg sorter comprising:
- a guide track provided with an upwardly inclined track portion,
- transfer means for transferring eggs over the guide track, and
- sorting means for sorting the eggs, which sorting means comprise:
- measuring means measuring a physical magnitude of the eggs, as well as
- control means sending the eggs in different directions in dependence on the value of the measured physical magnitude and being provided with a control valve which is capable of transferring the eggs from the track portion in two different directions in dependence on the status of the control valve, and
- further transfer means which further transfer the eggs coming from the control means.

A guide track may be considered to be a chute or a plate in or along which the eggs are transferred. The physical magnitude may be considered to be determined by weight, size, colour, shape .... The measuring means are formed for example by a load cell.

### State of the art

An egg sorter of this type is known from GB 1 212 268 A.

### Summary of the invention

It is an object of the invention to provide an egg sorter of the type defined in the opening paragraph which is simple and reliable. For this purpose the egg sorter according to the invention is characterized in that the further transfer means comprise two star-shaped wheels which are located at the end of the track portion, where one of the wheels is located on the side of the track portion over which the eggs are transferred and the other wheel is present on the track portion side turned away from this transfer track portion side, which wheels further transfer the eggs in two different directions, where the control valve guides the eggs to either of the wheels in dependence on the control valve status.

By utilizing star-shaped wheels combined with a movable control valve, the eggs can be transferred further from the guide track in two different directions in a simple and reliable manner.

An advantageous embodiment of the egg sorter according to the invention is characterized in that the two star-shaped wheels are present at one level and further transfer the eggs at one level in two opposite directions. By conducting the sorting at one and the same height, the lay-out possibilities of the arrangement are enhanced and the user-friendliness and convenience of arrangement are improved.

For transferring the eggs in a proper and reliable manner from the guide track, each star-shaped wheel is provided with three mounting parts which are positioned at a 120 degree angle relative to each other.

A further advantageous embodiment of the egg sorter according to the invention is characterized in that the transfer means comprise a transport element fitted with three mounting parts and which is movable along the guide track. The transport element is, for example, a chain and the mounting parts may be arranged for example as pins pushing the eggs along.

### Brief description of the drawings

The invention will be described below in more detail based on an example of embodiment of the egg sorter according to the invention represented in the drawing figures, in which:
Fig. 1 shows a perspective view of an embodiment of the egg sorter;
Fig. 2 shows a longitudinal view of the egg sorter shown in Fig. 1;
Fig. 3 shows the detail of the egg sorter shown in Fig. 2 showing the control means in a status in which the eggs are guided to the external machine;
Fig. 4 shows the detail having the control means in a status in which the eggs are guided to a first conveyor, and
Fig. 5 shows the detail having the control means in a status in which the eggs are guided to a second conveyor.

### Detailed description of the drawings

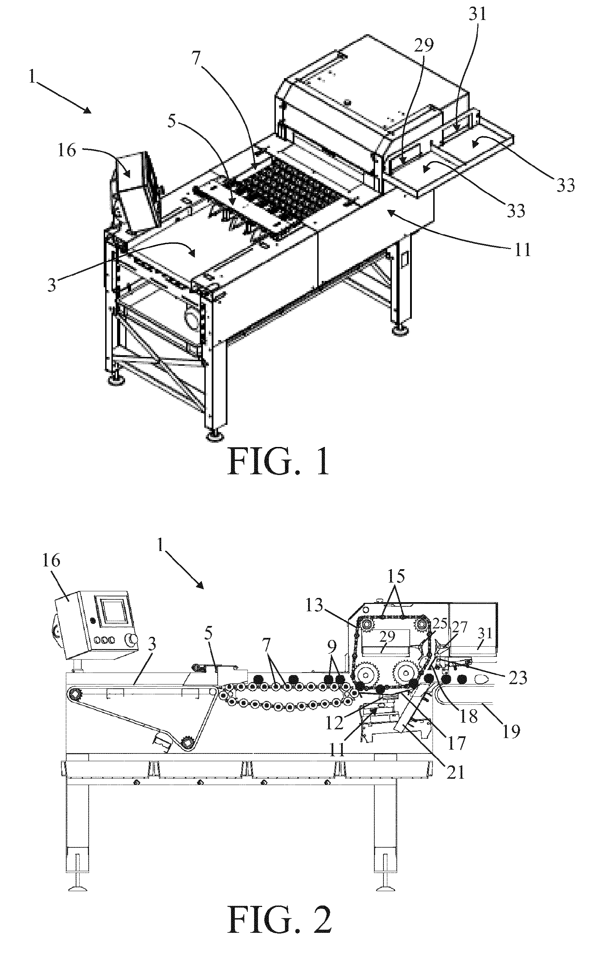

Figs. 1 and 2 show an embodiment of the egg sorter according to the invention in a perspective view and longitudinal view respectively. The egg sorter 1 comprises a feeding conveyor 3 via which the eggs are supplied and where a visual check may be conducted. This feeding conveyor feeds the eggs to a plurality of adjoining gates 5 from where the eggs are further transferred and lined up by means of rollers 7. The rollers line up the eggs 9 such that the eggs properly land on load cells 12 of measuring means 11 which cells are positioned at the end of the roller tracks (at the end of each roller track there is a load cell). When leaving the roller tracks the eggs are conveyed to the load cells by a transport element 13 and subsequently transported over a guide track 17. The transport element 13 is formed by an endless transport chain which is provided with mounting parts 15 which are formed by shafts/pins.

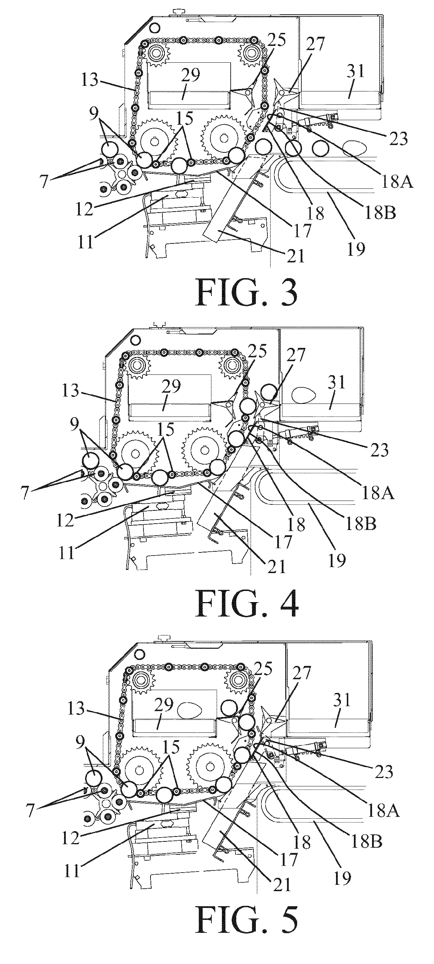

The load cells 12 detect the weight of each egg. The software of the control mechanism 16 of the egg sorter may be set to have three weight classes. The eggs ending up in the first weight class are transported straight on to an external machine 19 (see Fig. 3) because a control valve 21 is set to the bottom position by the control mechanism. The eggs ending up in the other two weight classes are transported upwards over an inclined track portion 18 of the guide track 17 since in that case the control valve 21 is set to the top position by the control mechanism (see Figs. 4 and 5).

At the top end of the track portion 18 is located a control valve 23 which guides the eggs to the left (Fig. 5) or to the right (Fig. 4) in dependence on the weight class they belong to. After the control valve the eggs are taken over by star-shaped wheels 25 and 27 conveying the eggs to conveyors 29 and 31 which convey the eggs to the pick-up sections 33 (see Fig. 1). In lieu of the egg pick-up sections also packing machines may be installed to which the conveyors convey the eggs. The star-shaped wheels 25 and 27 each have three mounting parts which are mounted at a 120 degree angle relative to each other and are present at one level. These star-shaped wheels 25 and 27 move the eggs at one level in two opposite directions (to the left and to the right in the respective Figs. 4 and 5) to the pick-up conveyors 29 and 31 which are also present at one level. The wheel 25 is located on the side 18A of the track portion over which the eggs are conveyed and the wheel 27 is located on the track portion side 18B turned away from the side 18A.

Albeit the invention has been described in the foregoing based on the drawings, it should be observed that the invention is not by any manner or means restricted to the embodiment shown in the drawings. The invention also extends to all embodiments deviating from the embodiment shown in the drawings within the scope defined by the claims.

## Claims

1. Egg sorter comprising:
- a guide track (17) provided with an upwardly inclined track portion (18),
- transfer means for transferring eggs (9) over the guide track, and
- sorting means for sorting the eggs, which sorting means comprise:
- measuring means (11) measuring a physical magnitude of the eggs, as well as
- control means sending the eggs in different directions in dependence on the value of the measured physical magnitude and being provided with a control valve (23) which is capable of transferring the eggs (9) from the track portion in two different directions in dependence on the status of the control valve, and
- further transfer means which further transfer the eggs coming from the control means,
**characterized in that** the further transfer means comprise two star-shaped wheels (25, 27) which are located at the end of the track portion, where one of the wheels (25) is located on the side (18A) of the track portion over which the eggs are transferred and the other wheel (27) is present on the track portion side (18B) turned away from this track portion side, which wheels further transfer the eggs in two different directions, where the control valve guides the eggs to either of the wheels in dependence on the control valve status.

2. Egg sorter as claimed in claim 1, **characterized in that** the two star-shaped wheels (25, 27) are present at one level and further transfer the eggs at one level in two opposite directions.

3. Egg sorter as claimed in claim 1 or 2, **characterized in that** each star-shaped wheel (25, 27) is provided with three mounting parts which are positioned at a 120 degree angle relative to each other.

4. Egg sorter as claimed in any one of the preceding claims, **characterized in that** the transfer means comprise a transport element (13) fitted with mounting parts (15) and movable along the guide track.

## Patentansprüche

1. Eiersortiermaschine, die Folgendes umfasst:
- eine Führungsbahn (17) mit einem Bahnstück (18), das aufwärts verläuft,
- Fördermittel für die Förderung von Eiern (9) entlang der Führungsbahn, und
- Sortiermittel für das Sortieren der Eier, wobei die Sortiermittel:
- Messmittel (11) umfassen, mit denen eine physische Größe der Eier gemessen wird, sowie
- Steuermittel, mit denen die Eier in Abhängigkeit von dem Wert der gemessenen physischen Größe in unterschiedliche Richtungen geleitet werden und die mit einer Steuerklappe (23) versehen sind, mit der die Eier (9) je nach Klappenstellung von dem Bahnstück aus in zwei verschiedene Richtungen geleitet werden können, und
- weitere Fördermittel, mit denen die Eier von den Steuermitteln aus weitergefördert werden können,
**dadurch gekennzeichnet, dass** die weiteren Fördermittel zwei sternförmige Räder (25, 27) umfassen, die am Ende des Bahnstücks angeordnet sind, wobei eines der Räder (25) an jener Seite (18A) des Bahnstücks angeordnet ist, über das die Eier bewegt werden, und sich das andere Rad (27) an der diesem Bereich abgewandten Seite (18B) des Bahnstücks befindet, wobei die Eier von den Rädern in zwei verschiedene Richtungen weitertransportiert und die Eier von der Steuerklappe je nach gegebener Stellung zu einem der Räder geleitet werden.

2. Eiersortiermaschine nach Anspruch 1, **dadurch gekennzeichnet, dass** die beiden sternförmigen Räder (25, 27) auf dem gleichen Niveau angeordnet sind und die Eier von diesen auf dem gleichen Niveau in zwei entgegengesetzte Richtungen weitertransportiert werden.

3. Eiersortiermaschine nach einem der Ansprüche 1 oder 2, **dadurch gekennzeichnet, dass** jedes der beiden sternförmigen Räder (25, 27) mit drei Zinken versehen ist, die in einem Winkel von 120 Grad zueinander angeordnet sind.

4. Eiersortiermaschine nach einem der vorangegangenen Ansprüche, **dadurch gekennzeichnet, dass** die Fördermittel ein Transportelement (13) umfassen, das Mitnehmer (15) umfasst und entlang der Führungsbahn bewegt werden kann.

## Revendications

1. Trieur à oeufs comprenant :
- une bande de conduction (17) pourvue d'une partie de bande (18) se dirigeant vers le haut,
- des moyens de déplacement pour déplacer des oeufs (9) au-dessus de la bande de conduction, et
- des moyens de triage pour trier les oeufs, lesquels moyens de triage :
- comprennent des instruments de mesure (11) mesurant une grandeur physique des oeufs, ainsi que
- des moyens de commande qui dirigent, selon la valeur de la grandeur physique mesurée, les oeufs dans des directions différentes, et qui sont pourvus d'une soupape de commande (23) qui, en fonction de la position de la soupape de commande, peuvent diriger les oeufs (9) vers deux directions différentes depuis la partie de bande, et
- des moyens de déplacement supplémentaires qui déplacent les oeufs plus loin depuis les moyens de commande,
**caractérisé en ce que** les moyens de déplacement supplémentaires comprennent deux roues en forme d'étoile (25, 27) se trouvant au bout de la partie de bande, où l'une des roues (25) se trouve sur le côté (18A) de la partie de bande au-dessus de laquelle sont déplacés les oeufs et l'autre roue (27) se trouve sur le côté opposé (18B) de la partie de bande, lesquelles roues transportent les oeufs plus loin dans deux directions différentes, où la soupape de commande conduit, en fonction de la position occupée, les oeufs vers l'une des roues.

2. Trieur à oeufs selon la revendication 1, **caractérisé en ce que** les deux roues en forme d'étoile (25, 27) se trouvent sur un même niveau et transportent les oeufs plus loin, sur un même niveau et dans deux directions opposées.

3. Trieur à oeufs selon la revendication 1 ou 2, **caractérisé en ce que** chaque roue en forme d'étoile (25, 27) est pourvue de trois dents ayant un angle de 120 degrés l'une par rapport à l'autre.

4. Trieur à oeufs selon une des revendications précédentes, **caractérisé en ce que** les moyens de déplacement comprennent un élément de transport (13) pourvu d'entraîneurs (15) et pouvant être déplacé le long de la bande de conduction.
